# EUROPEAN PATENT APPLICATION

(11) **EP 1 729 054 A2**
(43) Date of publication of application: **06.12.2006**
(21) Application number: 06090092.5
(22) Date of filing: 30.05.2006
(51) Int. Cl.: F16M 11/06

(54) **Apparatus foe incrementally adjusting a modular tooling coupling**

(30) Priority: 01.06.2005 US 686302 P; 04.05.2006 US 416897
(71) Applicant: Norgren Automotive Inc., Clinton Township, Michigan 48046-0787 (US)
(72) Inventor: Dellach, Jeffrey J., Macomb, Michigan 48042 (US); Dellach, Kenneth P., Shelby Township, Michigan 48316 (US); Vainstein, Mikhail, Clinton Township, Michigan 48038 (US)
(74) Representative: Pfenning, Meinig & Partner GbR

(57) **Abstract**

An apparatus (10) for incrementally adjusting a modular tooling coupling (12). The present invention provides a first coupling member (14) adaptable to receive a first portion of a modular tool wherein the first coupling member (14) has a contoured surface. A spacer (16) provides a first contoured surface for matingly engaging the contoured surface of the first coupling member (14) and a second contoured surface that is misaligned with respect to the first contoured surface of the spacer (16). A second coupling member (18) is adaptable to receive a second portion of the modular tool, and the second coupling member (18) has a contoured surface for matingly engaging the second contoured surface of the spacer (16) for providing incremental angular adjustment of the first coupling member (14) relative to the second coupling member (18).

## Description

This application is related to, and claims the benefit of priority from, United States Provisional Patent Application Serial No. 60/686,302, filed June 1, 2005.

### Field of the Invention

The present invention relates to an apparatus for incrementally adjusting a modular tooling coupling, and in particular, an apparatus having a spacer element placed between a pair of modular tooling coupling members wherein misaligned mating contoured surfaces between the spacer and the modular tooling coupling members provide a multitude of incremental adjustment.

### Background of the Invention

With the advent of mechanical manipulators and robotic arms, various modular tooling assemblies and end effectors have been designed to adjust the position of the modular tooling or the end effector so that the down time of the mechanical manipulator and robotic arm is decreased. Flexibility and adjustability are preferably designed into the modular tooling and end effectors so that the tooling assemblies can be configured for a variety of workpiece configurations.

Previous designs have utilized modular tooling coupling apparatuses whereby opposing serrated teeth are utilized to provide rotational adjustment of a first and second coupling about an axis. The serrated teeth provide a quick and predetermined rotational adjustment of the first and second couplings relative to one another while assuring that the couplings will not rotate or slip with respect to one another when the serrated teeth are engaged in a tightened position. The disadvantage of the serrated teeth is that the couplings are limited to predetermined positions based on the position of the mating teeth. For instance, if the serrated teeth were spaced at a 7.5° angle, then the serrated teeth would allow for forty-eight (48) different positions of the first coupling relative to the second coupling. Thus, the serrated teeth do not allow for the first and second coupling to be adjusted to a position between the serrated teeth, i.e., any position other than every 7.5º. Another disadvantage to the previous designs is that if the serrated teeth are subjected to an intolerable load, the serrated teeth may break or deform, thereby requiring that the entire coupling be replaced. This can be rather costly, thereby decreasing the efficiency of the operations utilizing such tooling. Obviously, such inefficiencies are undesirable in an industrialized environment.

It would be desirable to provide an adjustable coupling member that provided for a multitude of adjustable positions of the modular tooling. It would also be desirable to provide an adjustable coupling member that provided for a fine adjustment of the serrated teeth engagement. In addition, it would be desirable to provide an adjustable coupling member that did not completely fail under intolerable loads.

### Summary of the Invention

The present invention provides an apparatus for incrementally adjusting a modular tooling coupling. The apparatus includes a first coupling member, a second coupling member, and a spacer for providing incremental angular adjustment of said first coupling member relative to said second coupling member. The first coupling member and the second coupling member are adaptable to receive a first portion and a second portion, respectively, of a modular tool for linear and rotational adjustment of said first portion of said modular tool with respect to said first coupling member and said second portion of said modular tool with respect to said second coupling member. The first coupling member includes a contoured surface, and the spacer includes a first contoured surface for matingly engaging the contoured surface of the first coupling member. The spacer further includes a second contoured surface misaligned with respect to said first contoured surface of said spacer for matingly engaging a contoured surface of the second coupling member.

The first contoured surface of the spacer and the contoured surface of the first coupling member include a first number of teeth, wherein the first coupling member is rotatably adjustable with respect to the spacer to allow angular adjustment of a first magnitude. The second contoured surface of the spacer and the contoured surface of the second coupling member include a second number of teeth, wherein the second coupling member is rotatably adjustable with respect to the spacer to allow angular adjustment of a second magnitude.

The spacer may be fabricated from a first material having a lesser yielding point than a second material from which the contoured surfaces of the first and second coupling members are fabricated in order to prevent damages to the first coupling member and the second coupling member.

In order to align the first coupling member and the second coupling member, a reference indicator may be provided on each of the first and second coupling members. The reference indicator on the first coupling member is selectively alignable with a first set of indicia corresponding to discrete locations on the first contoured surface of the spacer. The reference indicator on the second coupling member is selectively alignable with a second set of indicia corresponding to discrete locations on the second contoured surface of the spacer. Furthermore, the first set of indicia may include a plurality of letters corresponding to individual teeth on the first contoured surface of the spacer. Likewise, the second set of indicia may include a plurality of numbers corresponding to individual teeth on the second contoured surface of the spacer. In this manner, the first coupling member and the second coupling member are rotatable with respect to the spacer to align the reference indicators with respect to the letters and numbers to define a series of discrete letter-number combinations, wherein each letter-number combination corresponds to a distinct angular relationship between the first coupling member and the second coupling member.

### Brief Description of the Drawings

The various other uses of the present invention will become more apparent by referring to the following detailed descriptions and drawings in which:
FIG. 1 is an exploded perspective view showing the apparatus for incrementally adjusting the modular tooling coupling of the present invention; and
**FIG. 2A** is a first portion of a table showing the various possible positions of the apparatus for incrementally adjusting the modular tooling coupling of the present invention.
FIG. 2B is a second portion of a table showing the various possible positions of the apparatus for incrementally adjusting the modular tooling coupling of the present invention.
FIG. 2C is a third portion of a table showing the various possible positions of the apparatus for incrementally adjusting the modular tooling coupling of the present invention.

### Description of the Preferred Embodiment

Referring to the drawings, the present invention will now be described in detail with reference to the disclosed embodiment.

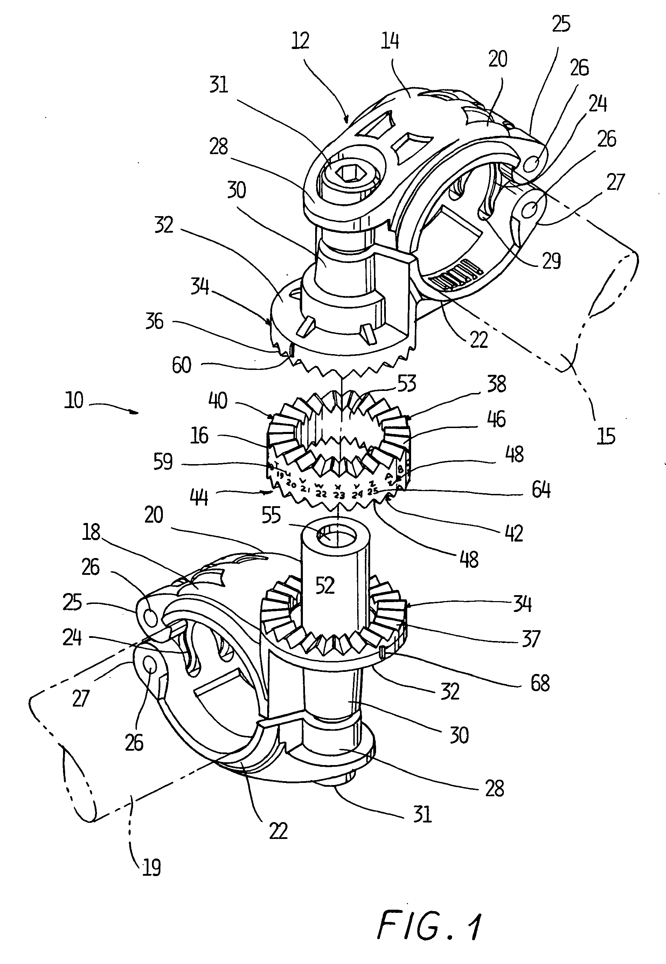

FIG. 1 illustrates an apparatus 10 for incrementally adjusting a modular tooling coupling 12 of the present invention. The modular tooling coupling 12 provides a first coupling member 14 which may be connectable to a splined boom rod 15 or some other form of modular tooling, such as tubing, slide rails, vacuum cups, grippers, clamps, etc. The first coupling member 14 engages a spacer 16 which in turn engages a second coupling member 18. The second coupling member 18 is connectable to a master boom 19 or some other form of modular tooling, such as a splined boom rod, tubing, slide rails, vacuum cups, grippers, clamps, etc. The releasable engagement of the spacer 16 with respect to the first and second coupling members 14, 18, respectively, provides for a multitude of incremental rotational adjustment of the first coupling member 14 relative to the second coupling member 18.

In order to provide for the adjustment of the modular tooling coupling 12, the first coupling member 14 and the second coupling member 18 each provide a pair of similar, substantially semi-cylindrical clamp portions 20, 22 that are hinged together by a pair of links 24. The semi-cylindrical clamp portions 20, 22 each have a boss 25, 27, respectively, at one of their ends with a pair of open-ended slots 29 provided in each boss 25, 27 for receiving the links 24. A pair of pivot pins 26 extend through an aperture provided in each boss 25, 27 and in each link 24 to secure the links 24 to the semi-cylindrical clamp portions 20, 22. By having the links 24 connect to each of the pivot pins 26, the semi-cylindrical clamp portions 20, 22 remain hingedly connected.

The semi-cylindrical clamp portions 20, 22 provide another set of bosses 28, 30 at the opposite end of the semi-cylindrical clamp portions 20, 22 from bosses 25, 27. The bosses 28, 30 are integrally formed on the semi-cylindrical clamp portions 20, 22 of each of the first and second coupling members 14, 18, and each boss 28, 30 has an aperture that extends therethrough. The apertures are coaxially aligned for receiving a threaded fastener 31. The threaded fasteners 31 may be loosened or tightened to secure the master boom 19 and boom rod 15 to the first and second coupling members 14, 18, respectively. The boss 30 on the lower semi-circular clamp portion 22 of each of the first and second coupling members 14, 18 provides a substantially cylindrical base portion 32 that extends integrally from the boss 30. The cylindrical base portion 32 has a contoured surface 34 on the bottom surface of the cylindrical base portion 32. The contoured surface 34 provides a plurality of integrally formed serrated teeth 36, 37 that extend radially outward from the center of the cylindrical base portion 32. The serrated teeth 36 on the first coupling member 14 are equally spaced at 15° degree angles so as to provide for a total of twenty-four (24) serrated teeth 36. The serrated teeth 37 on the second coupling member 18 are equally spaced at 14.4° degree angles so as to provide for a total of twenty-five (25) serrated teeth 37.

In order to provide incremental adjustment of the first coupling member 14 relative to the second coupling member 18, the spacer 16 provides a substantially cylindrical segment having a first contoured surface 38 on a first side 40 of the spacer 16 and a second contoured surface 42 on a second side 44 of the spacer 16. The first contoured surface 38 of the spacer 16 provides a plurality of equally spaced, integrally formed serrated teeth 46 extending radially outward from the center of the spacer 16. The serrated teeth 46 on the first side 40 of the spacer 16 are spaced at 15º angles so as to provide twenty-four (24) teeth which matingly engage the serrated teeth 36 of the first coupling member 14.

To provide a multitude of adjustable positions, the second contoured surface 42 on the second side 44 of the spacer 16 provides a plurality of equally spaced, integrally formed serrated teeth 48 that also extend radially outward from the center of the spacer 16. However, the serrated teeth 48 on the second side 44 of the spacer 16 are spaced at 14.4º angles, thereby providing a total of twenty-five (25) serrated teeth 48 on the second side 44 of the spacer 16. The serrated teeth 48 on the second side 44 of the spacer 16 matingly engage the serrated teeth 37 provided on the cylindrical base portion 32 of the second coupling member 18. As previously noted, the serrated teeth 37 on the cylindrical base portion 32 of the second coupling member 18 are similar in that they are also spaced at 14.4º thereby providing twenty-five (25) mating serrated teeth 50.

When the apparatus 10 is assembled, the second coupling member provides a post 52 which extends upward from the cylindrical base portion 32 of the second coupling member 18. The post 52 extends through a bore 53 of the cylindrical spacer 16 such that the serrated teeth 40 on the second side 44 of the spacer 16 matingly engage the serrated teeth 37 on the cylindrical base portion 32 of the second coupling member 18. The post 52 is received within a bore inside the boss 30 of the first coupling member 14 so that the serrated teeth 46 on the first side 40 of the spacer 16 matingly engage the serrated teeth 36 on the cylindrical base portion 32 of the first coupling member 14. The threaded fastener 31 in the first coupling member 14 threadingly engages coaxially aligned threaded apertures which extend through the bosses 28, 30 and the cylindrical base portion 32 of the first coupling member 14. In addition, the threaded fastener 31 extends into a threaded aperture 55 in the post 52 of the second coupling member 18 which is coaxially aligned with the apertures in the first coupling member 14. By tightening and loosening the threaded fastener 31, the engagement between the serrated teeth 36, 37, 46, 48 may be tightened or loosened to provide radial adjustment of the first coupling member 14 relative to the second coupling member 18.

In order to have a reference as to the position of the first and second coupling members 14, 18, the spacer 16 has alphanumeric indicia 48 formed on the outer surface of the spacer 16. The alphanumeric indicia 48 provides a different letter 59 at each root of the serrated teeth 46 provided on the first side 40 of the spacer 16. A different number 64 is provided at every root of the serrated teeth 46 on the second side 44 of spacer 16. A reference indicator 60, 68 is provided on an outer surface of the cylindrical base portions 32 of the first and second coupling members 14, 18, respectively. The reference indicators 60, 68 are fabricated from a narrow piece of raised material attached to the outer surfaces of the cylindrical base portions 32 of the first and second coupling members 14, 18, respectively.

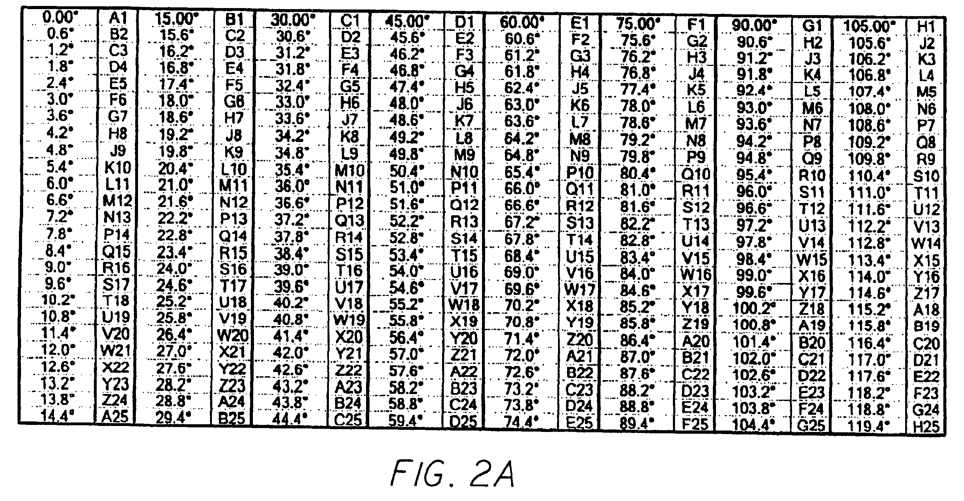

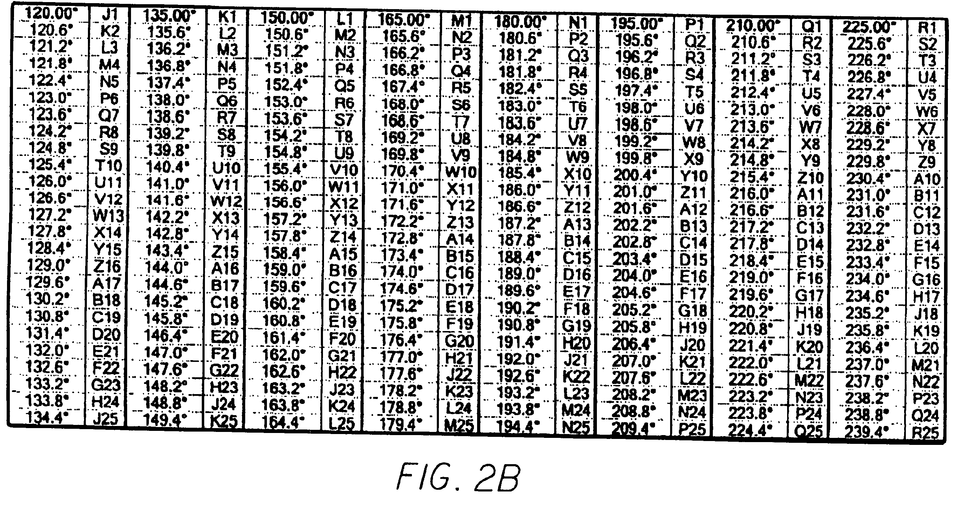

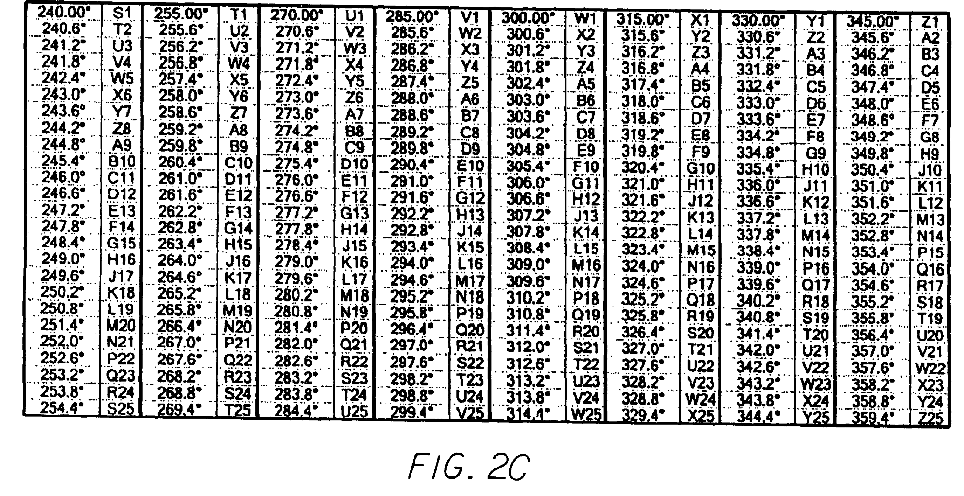

By having the serrated teeth 36, 46 spaced at 15º intervals on the first side 40 of the spacer 16, and by having the serrated teeth 37, 48 spaced at 14.4º intervals on the second side 44 of the spacer 16, rotational adjustment of the first coupling member 14 relative to the second coupling member 18 may be provided at every 0.6º rotational interval. Thus, the apparatus 10 provides for six hundred (600) different incremental rotational adjustments of the first coupling member 14 relative to the second coupling member 18. For instance, by placing the reference indicator 68 on the second coupling member 18 to the numeral "1" on the second side 44 of the spacer 66, the reference indicator 60 on the first coupling member 14 may be placed on any of the twenty-four (24) letters 59 (letters "I" and "O" have not been used in order to avoid confusion with the numerals) to provide for twenty-four (24) different incremental positions when the reference indicator 68 on the second coupling member 18 is on the number "1." When the reference indicator 68 on the second coupling member 18 is placed on number "2" on the second side 44 of the spacer 16, the reference indicator 60 on the first coupling member 14 may be moved to any of the twenty-four (24) letters 59 on the first side 40 of the spacer 16 to provide an additional twenty-four (24) incremental positions. This process may continue in order to realize all of the six hundred (600) positions of incremental adjustment. **FIGS. 2A - 2C** exhibit a table showing the various angular positions of the first coupling member 14 relative to the second coupling member 18 with respect to each position of the reference indicators 66, 60. Thus, the apparatus 10 provides a higher degree of adjustment than the prior art while still providing a repeatable and accurate method of adjustment.

In order to preserve the condition of the serrated teeth 36, 37 on the cylindrical base portions 32 of the first and second coupling members 14, 18, respectively, during intolerable loads, the spacer 16 may be fabricated from a material having a lesser yielding point than the material utilized to form the serrated teeth 36, 37 on the cylindrical base portions 32 of the first and second coupling members 14, 18. Thus, when an intolerable load is realized by the apparatus 10, the spacer 16 will yield or fail as opposed to the serrated teeth 36, 37 on the first and second coupling members 14, 18 yielding or failing or any other portions of the first and second coupling member 14, 18 yielding or failing. The yielding or failing of the spacer 16 acts as an indicator that an overload condition has occurred. When the spacer 16 yields or fails, only the spacer 16 need be replaced as opposed to either one or both of the first and second coupling members 14, 18. This reduces the replacement cost of the apparatus 10 thereby increasing the efficiency of the process when utilizing the apparatus 10.

In operation, the second coupling member 18 may first be connected to the master boom 19 by loosening the threaded fastener 31 on the second coupling member 18 and placing the master boom 19 through the semi-circular clamps 20, 22. The threaded fastener 31 is then tightened to secure the second coupling member 18 to the master boom 19. The threaded fastener 31 is loosened to the point of where the spacer 16 may be rotated relative to the first and second coupling members 14, 18. The exact position of the first coupling member 14 relative to the second coupling member 18 may be determined by referencing the chart shown in **FIGS. 2A - 2C.** When the position is determined, the spacer 16 is rotated such that the reference indicator 68 on the second coupling member 18 is aligned with the appropriate number 64 on the second side 44 of the spacer 16. A first coupling member 14 is then rotated until the reference indicator 66 is aligned with the appropriate letter 59 on the first side 40 of the spacer 16. The serrated teeth 36, 3 7, 46, 48 are placed in proper mating engagement, the splined boom rod 15 is placed between the semi-circular clamps 20, 22, and the threaded fastener 31 is tightened. The apparatus 10 is then ready for use.

While the invention has been described in connection with what is presently considered to be the most practical and preferred embodiment, it is to be understood that the invention is not to be limited to the disclosed embodiments, but to the contrary, it is intended to cover various modifications or equivalent arrangements included within the spirit and scope of the appended claims. The scope is to be accorded the broadest interpretation so as to encompass all such modifications and equivalent structures as is performed under the law.

## Claims

1. An apparatus for incrementally adjusting a modular tooling coupling, comprising:
a first coupling member adaptable to receive a first portion of a modular tool, and said first coupling member having a contoured surface;
a spacer having a first contoured surface for matingly engaging said contoured surface of said first coupling member, and a second contoured surface misaligned with respect to said first contoured surface of said spacer; and
a second coupling member adaptable to receive a second portion of said modular tool, and said second coupling member having a contoured surface for matingly engaging said second contoured surface of said spacer for providing incremental angular adjustment of said first coupling member relative to said second coupling member.

2. The apparatus stated in claim 1, further comprising:
a first number of teeth on said first contoured surface of said spacer and said contoured surface of said first coupling member; and
a second number of teeth on said second contoured surface of said spacer and said contoured surface of said second coupling member wherein said first number of teeth is different than said second number of teeth.

3. The apparatus stated in claim 1, further comprising:
said first coupling member and said second coupling member allowing linear and rotational adjustment of said first portion and said second portion of said modular tool, respectively.

4. The apparatus stated in claim 1, further comprising:
said first coupling member rotatably adjustable with respect to said spacer to allow angular adjustment of a first magnitude; and
said second coupling member rotatably adjustable with respect to said spacer to allow angular adjustment of a second magnitude.

5. The apparatus stated in claim 1, further comprising:
said spacer fabricated from a first material having a lesser yielding point than a second material from which said contoured surfaces of said first and second coupling members are fabricated.

6. The apparatus stated in claim 1, further comprising:
a first set of indicia located on said spacer and corresponding to discrete positions of said first contoured surface of said spacer with respect to said contoured surface of said of said first coupling member;
a reference indicator located on said first coupling member for selectively aligning said first coupling member with respect to said first set of indicia;
a second set of indicia located on said spacer and corresponding to discrete positions of said second contoured surface of said spacer with respect to said contoured surface of said second coupling member; and
a reference indicator located on said second coupling member for selectively aligning said second coupling member with respect to said second set of indicia.

7. The apparatus stated in claim 6, further comprising:
a first plurality of teeth formed on said first contoured surface of said spacer, wherein adjacent pairs of said first plurality of teeth meet at a root;
said first set of indicia including a letter corresponding to each said root;
a second plurality of teeth formed on said second contoured surface of said spacer, wherein adjacent pairs of said second plurality of teeth meet at a root; and
said second set of indicia including numbers corresponding to each said root of said adjacent pairs of said second plurality of teeth.

8. The apparatus stated in claim 7, further comprising:
said first coupling member and said second coupling member rotatably adjustable with respect to said spacer to align said reference indicator on said first coupling member and said reference indicator on said second coupling member with said letters and said numbers, respectively, on said spacer to define a series of discrete letter-number combinations, wherein each said letter-number combination corresponds to a distinct angular relationship between said first coupling member and said second coupling member.

9. An apparatus for incrementally adjusting a modular tooling coupling, comprising:
a first coupling member adaptable to receive a first portion of a modular tool, and said first coupling member having a contoured surface;
a spacer having a first contoured surface for matingly engaging said contoured surface of said first coupling member, and said spacer rotatably adjustable with respect to said first coupling member to allow for predetermined angular adjustment of a first magnitude;
said spacer having a second contoured surface misaligned with respect to said first contoured surface of said spacer; and
a second coupling member adaptable to receive a second portion of said modular tool, and said second coupling member having a contoured surface for matingly engaging said second contoured surface of said spacer, and said second coupling member rotatably adjustable with respect to said spacer to allow for predetermined angular adjustment of a second magnitude.

10. The apparatus stated in claim 9, further comprising:
a first set of indicia located on an outer surface of said spacer and corresponding to discrete positions of said first contoured surface of said spacer with respect to said contoured surface of said second coupling member;
a reference indicator located on said first coupling member for selectively aligning said first coupling member with respect to said first set of indicia;
a second set of indicia corresponding to discrete positions of said second contoured surface of said spacer with respect to said contoured surface of said second coupling member; and
a reference indicator located on said second coupling member for selectively aligning said second coupling member with respect to said second set of indicia.

11. The apparatus stated in claim 10, further comprising:
said first set of indicia having a series of letters spaced along the periphery of said spacer;
a second set of indicia including a series of numbers spaced around the periphery of said spacer; and
said reference indicator on said first coupling member alignable with each letter of said series of letters, and said reference indicator on said second coupling member alignable with each number of said series of numbers to define a series of discrete letter-number combinations, wherein each said letter-number combination corresponds to a distinct angular relationship between said first coupling member and said second coupling member.

12. The apparatus stated in claim 10, further comprising:
said contoured surface of said first coupling member having a first number of teeth spaced with respect to one another at a first angular spacing;
said first contoured surface of said spacer having said first number of teeth spaced with respect to one another at said first angular spacing;
said contoured surface of said second coupling member having a second number of teeth spaced with respect to one another at a second angular spacing; and
said second contoured surface of said spacer having said second number of teeth spaced with respect to one another at said second angular spacing.

13. The apparatus stated in claim 12, further comprising:
said first coupling member and said second coupling member providing linear and rotational adjustment of said first portion of said modular tool and said second portion of said modular tool.

14. The apparatus stated in claim 9, further comprising:
said spacer fabricated from a first material having a lesser yielding point than a second material from which said contoured surfaces of said first and second coupling members are fabricated.

15. An apparatus for incrementally adjusting a modular tooling coupling, comprising:
a first coupling member adaptable to receive a first portion of a modular tool for linear and rotational adjustment, and said first coupling member having a contoured surface including a first number of radially-extending V-shaped teeth;
a spacer having a first contoured surface including a first number of radially-extending V-shaped teeth for matingly engaging said contoured surface of said first coupling member, and a second contoured surface having a second number of radially-extending V-shaped teeth misaligned with respect to said first contoured surface of said spacer wherein said first number of radially extending V-shaped teeth is different than said second number of radially extending V-shaped teeth;
a second coupling member adaptable to receive a second portion of said modular tool for linear and rotational adjustment, and said second coupling member having a contoured surface including a second number of radially-extending teeth for matingly engaging said second contoured surface of said spacer, wherein rotation of said first coupling member with respect to said spacer provides incremental angular adjustment of a first magnitude, and rotation of said second coupling member with respect to said spacer provides incremental angular adjustment of a second magnitude for rotatably adjusting said first coupling member with respect to said second coupling member about a first axis; and
said spacer fabricated from a first material having a lesser yielding point than a second material from which said contoured surfaces of said first and second coupling members are fabricated.

16. The apparatus stated in claim 15, further comprising:
a first set of indicia located on an outer surface of said spacer and corresponding to individual teeth of said first number of teeth of said first contoured surface of said spacer;
a second set of indicia located on an outer surface of said spacer and corresponding to individual teeth of said second number of teeth of said second contoured surface of said spacer;
a reference indicator located on said first coupling member for selectively aligning said first coupling member with respect to said first set of indicia; and
a reference indicator located on said second coupling member for selectively aligning said second coupling member with respect to said second set of indicia.

17. The apparatus stated in claim 16, further comprising:
said first set of indicia including a plurality of letters wherein alignment of said reference indicator on said first coupling member with each letter of said plurality of letters corresponds to a discrete angular relationship of said first coupling member with said spacer;
said second set of indicia including a plurality of numbers wherein selective alignment of reference indicator on said second coupling member with each number of said plurality of numbers corresponds to a discrete angular relationship between said second coupling member and said spacer.

18. The apparatus stated in claim 17, further comprising:
alignment of said spacer with said first coupling member and said second coupling member defines a series of discrete letter-number combinations, wherein each letter-number combination responds to a distinct angular relationship between said first coupling member and said second coupling member.

19. The apparatus stated in claim 18, further comprising:
said first coupling member and said second coupling member allowing linear and rotational adjustment of said first portion and said second portion of said modular tool, respectively.

20. The apparatus stated in claim 19, further comprising:
said spacer is substantially cylindrical.
